# EUROPEAN PATENT SPECIFICATION

(11) **EP 3 552 485 B1**
(45) Date of publication and mention of the grant of the patent: **30.06.2021**
(21) Application number: 19164923.5
(22) Date of filing: 25.03.2019
(51) Int. Cl.: A01K 5/00

(54) **FEEDING DEVICE FOR FEEDING ANIMALS**
FÜTTERUNGSVORRICHTUNG ZUM FÜTTERN VON TIEREN
DISPOSITIF D'ALIMENTATION POUR L'ALIMENTATION D'ANIMAUX

(30) Priority: 12.04.2018 NL 2020755
(43) Date of publication of application: 16.10.2019
(73) Proprietor: Lely Patent N.V., 3147 PB Maassluis (NL)
(72) Inventor: SIE, Howard, 3147 PB Maassluis (NL); PASTOOR, Jan Lambertus, 3147 PB Maassluis (NL); VAN DEN BERG, Karel, 3147 PB Maassluis (NL)
(74) Representative: Octrooibureau Van der Lely N.V.

(56) References cited:
- WO-A1-2012/074377
- US-A- 5 803 375

## Description

The present invention relates to a feeding device for feeding animals, said device comprising a feed container for accommodating feed, the feed container being provided with a side wall having a closable dispensing opening, and a feed removing device for removing feed from the feed container, the feed removing device being provided outside of the side wall near the dispensing opening and having a rotatable, substantially cylindrical body with feed catching teeth and a drive unit for the body.

Such devices are used e.g. in automatic feeding systems, such as the Lely Vector®, for processing feed for livestock and are known in the art, e.g. from WO 2012/074377. The feeding device described therein has the problem that long grass or straw tends to wrap itself around the roller body, thus causing undesirable obstructions. There is a need for a better feeding device.

US patent publication US5803375A describes a method and apparatus for use in the cutting, processing and discharge of material. The apparatus comprises a container having a first cutter driven about a vertical axis by a first motor, a housing radially open to the container having a second cutter driven by a second motor which second cutter rotates in the same direction as the first cutter and which second cutter protrudes radially into the container and discharge means for selectively discharging processed material from the container.

International patent publication WO2012/074377 A1 describes a feed-mixing device comprising a container with a side wall having a dispensing opening which can be closed off with a slide, in front of which a removing device is placed which, for example, comprises a roller with teeth. When the roller rotates, the teeth extend inside the side wall. On a first peripheral section of the roller, the teeth are placed in such a manner that they do not extend inside the side wall. The slide can be positioned in such a manner that it runs in a fluent and continuous manner with respect to the side wall, while the assembly still forms a compact arrangement.

It is an object of the present invention to provide an improved feeding device.

The invention achieves the object at least in part by means of a feeding device according to claim 1, in particular a feeding device for feeding animals, said device comprising a feed container for accommodating feed, the feed container being provided with a side wall having a closable dispensing opening, and a feed removing device for removing feed from the feed container, the feed removing device being provided outside of the side wall near the dispensing opening and having a rotatable, substantially cylindrical body with feed catching teeth and a drive unit for the body, wherein the teeth are provided in a movable way relative to the body during its rotation in such a way that, during a first part of each rotation of the body, the teeth are protruding from the body through slots to catch feed and that, during a second part of each rotation of the body, the teeth are positioned substantially completely within the circumference of the body.

The movable teeth, on the one hand, while they are protruding, allow a good feed catch, and on the other hand, while they are within the body, ensure an easy feed drop.

Suitable and advantageous embodiments are described in the dependent claims, as well as in the description below.

The feeding device may advantageously be designed such that the teeth and the body are arranged to perform a synchronized movement in each rotation, the teeth protruding through the slots in the body in order to catch feed in the container when these slots are facing the dispensing opening and the teeth being retracted inside the body to drop the feed outside the container when the slots are facing away from the dispensing opening. Thus, an optimal feed removal is achieved.

The feeding device may be provided with an orientating device for the feed removing device, which orientating device is suitable for orientating the cylindrical body in a rest position such that the teeth do not hinder the closing of the container's dispensing opening. In this way, a compact construction is realised enabling a positioning of the removing device close to the dispensing opening, resulting in a good feed removal, even without having to adapt the position of the feed removing device.

The orientating device may advantageously be suitable for orientating the cylindrical body in a rest position such that the teeth are positioned substantially completely within the circumference of the body. This enhances compactness and safety.

In a further embodiment of the feeding device, the teeth are provided in at least one, preferably one single row. This configuration offers an efficient feed catch.

In a still further embodiment each row extends substantially in parallel to the axis of rotation of the body. This a simple and efficient construction.

Alternatively, each row may extend substantially helically around the axis of rotation of the body. This constitutes an alternative, but also efficient configuration.

In a further embodiment the rotation axis of the body extends substantially vertically. This further improves the feed drop.

Advantageously, the feed removing device comprises a curved track construction for moving the teeth with respect to the body during its rotation. Realising the relative movement of the teeth with respect to the body during its rotation by means of a curved track construction is a well-tried and reliable way.

The teeth can be mounted on a frame which is attached hingeably to the inside of the body. This allows for a simple construction.

In a further embodiment, the frame is provided with a following means, like a wheel, suitable for following a defined curved track provided on the inside of a fixed, non-rotatable end cover of the body during each rotation of the body. This represents a robust construction.

In a highly advantageous embodiment, the rotating body and the hingeable teeth frame following the curved track perform a synchronized movement. In this way, it is possible to provide relatively small slots for the teeth. Larger slots have the disadvantage of allowing feed to be pulled in by the retracting movement of the teeth.

In a further embodiment, the curved track is formed such that during each rotation of the body the teeth perform a protruding movement through the slots in the body followed by a retracting movement through the slots. Thus excellent feed removing results are obtained.

Advantageously, the curved track is formed such that during each rotation of the body the teeth are positioned substantially completely within the circumference of the body during substantially half of the rotation. This guarantees an excellent feed drop.

The feeding device may be automated or fully automated. This results in a very user-friendly feeding device.

The feed container can comprise a mixing device, preferably with an auger, and an undercarriage. In this way, a versatile and mobile device is realised.

The invention will now be further elucidated with reference to the following Figures.
Figure 1 shows a feeding device according to the invention;
Figure 2 shows a feed removing device according to the invention;
Figure 3 shows a teeth frame which is to be attached hingeably to the inside of the body of the feed removing device;
Figures 4A, 4B and 4C illustrate three positions of the teeth frame during its movement defined by the curved track.

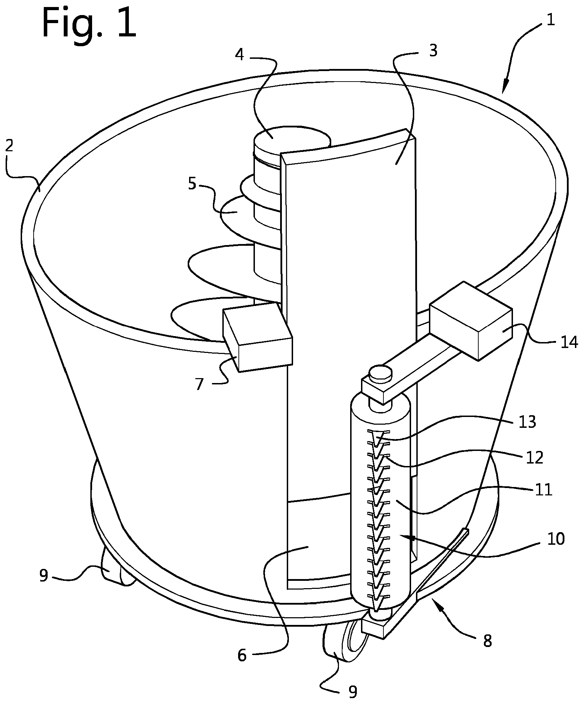

In Figure 1 a feeding device provided with a feed container and a feed removing device according to the invention is depicted. Such a device can be used in an automatic feeding system, such as the Lely Vector®, for processing feed for livestock. The container 1 has a side wall 2 with a slide 3 and an internal mixing device 4 with an auger 5. Slide 3 can close off a dispensing opening 6 and can be moved up and down by means of a slide motor 7, such as a stepping motor. The slide 3 has a shape which corresponds to the shape of the container 1 and the side wall 2. When the slide 3 is closed, the inside of the container 1 is smooth, without projections, and the side wall 2 runs in a fluent, symmetrical manner. Obviously, it is possible to use a slide which is shaped differently, but that would be suboptimal.

The illustrated device is particularly suitable for straw, grass and grass products which have to be cut and/or mixed. This takes place in the container 1, which is a receptacle with an upright side wall 2. The receptacle 1 is often slightly elongate in order to prevent feed from just being rotated without being mixed or cut. This mixing and/or cutting is carried out here by means of a mixing device 4 which comprises an auger 5. If desired, it can also comprise a bottom scraper.

An undercarriage 8 with a number of wheels 9 serves to move the device as a whole. This makes it possible to dispense feed at different locations, for example in a feed alley. In this case, the device can be moved by means of, for example, a tractor (not shown) or the like. Alternatively, e.g. when used in an automatic feeding system, such as the Lely Vector®, the device is self-propelled and to this end provided with a drive means and a control means, likewise not shown here. It is also possible to use the device as a static mixing and/or cutting device which can dispense mixed and/or cut feed to, for example, pulled or self-propelled feed-dispensing wagons.

Reference numeral 10 denotes a feed removing device which comprises a cylindrical body or roller 11 with slots 12 through which teeth 13 can protrude, as will be explained below in more detail. The roller 11 can be driven (rotated) by a roller drive 14, e.g. a helical bevel gear unit. The feed removing device 10 is (fixedly) positioned in front of the dispensing opening. In use, the teeth 13, when protruding through the slots 12, can extend into the container 1 to catch feed, so as to remove the feed from the container 1.

The teeth 13 and the roller 11 perform a synchronized movement in each rotation, allowing the teeth 13 to protrude through the slots 12 in order to catch feed in the container 1 and then retract through the slots 12 in order to allow the feed to be dropped outside the container 1. The synchronized movement is such that the teeth 13 will protrude through the slots 12 when these are facing the dispensing opening 6 and the teeth 13 will be positioned inside the roller 11 to drop the feed when the slots 12 are facing away from the dispensing opening 6. As a matter of fact, this has not been illustrated entirely correctly in Figure 1, where, for clarity's sake, the teeth 13 are shown to protrude through the slots 12 although these are not facing the dispensing opening 6.

The feed container 1 may be provided with an orientating device (not shown) for the feed removing device 10, which orientating device is suitable for orientating the cylindrical roller 11 in a rest position such that the teeth 13 do not hinder the closing of the container's dispensing opening 6 by the slide 3. In this way, after each feed removal a compact construction is realised enabling a positioning of the removing device 10 close to the dispensing opening 6, resulting in a good feed removal, even without having to adapt the position of the feed removing device 10. Of course, the feed removing device 10 may also be arranged in a movable way relative to the container 1, so that it can be moved into the container 1 and out again, but according to the invention this is not necessary for a proper feed removal.

The orientating device may advantageously be suitable for orientating the cylindrical body 11 in a rest position such that the teeth 13 are positioned substantially completely within the circumference of the roller 11. This enhances compactness and safety.

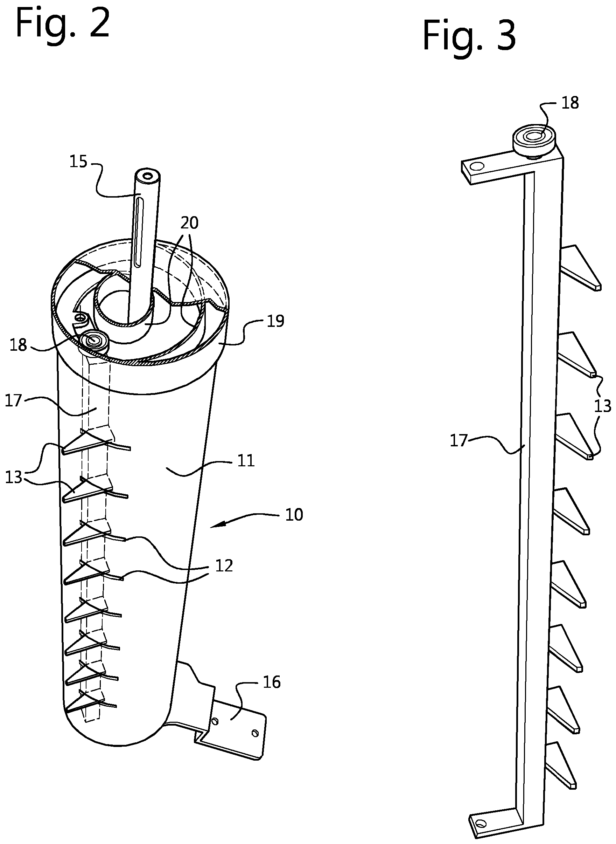

Figure 2 shows a feed removing device 10 according to the invention. The roller or cylindrical body 11 is rotatable around shaft 15, which can be driven by a roller drive 14 (shown in Figure 1), e.g. a helical bevel gear unit. Teeth 13 can protrude through slots 12. A fastening means 16 is provided for mounting the device near the dispensing opening 6 of the feed container 1.

It will now be described how the synchronized movement of the teeth 13 and the roller 11 is achieved, so as to realise the desired protrusion and retraction of the teeth 13 through the slots 12 with respect to the body 11 during its rotation, in order to accomplish the feed removal in accordance with the invention.

The teeth 13 are provided on a teeth frame 17, which is also shown separately in Figure 3. The teeth frame 17 is attached hingeably to the inside of the body 11 of the feed removing device 10. The teeth 13 can be provided in at least one row. This configuration offers an efficient feed catch. The or each row extends substantially in parallel to the axis of rotation of the body 11. This a simple and efficient construction. In the shown embodiment the teeth 13 are provided in one single row. This allows for an extremely simple construction. The rotation axis of the body preferably extends substantially vertically. This further improves the feed drop.

The frame 17 is provided with a following means, like a guide wheel 18. On the inside of a fixed, non-rotatable end cover 19 (shown in a cutaway view) of the rotatable roller 11 there is provided a curved track, which is defined by guiding portions 20 provided on the inside of the end cover 19. Guide wheel 18 is suitable for following the defined curved track 20 provided on the inside of the end cover 19 of the body 11 during each rotation of the body 11 with the hingeably attached frame 17. The relative movement of the teeth 13 with respect to the body 11 during its rotation is realised by means of the curved track construction. This is not only a robust, but also a well-tried, reliable construction.

Thus, the feed container 1 and the feed removing device 10 are designed such that the teeth 13 and the body 11 are arranged to perform a synchronized movement in each rotation, the teeth 13 protruding through the slots 12 in the body 11 in order to catch feed in the container 1 when these slots 12 are facing the dispensing opening 6, and the teeth 13 being retracted inside the roller 11 to drop the feed outside the container 1 when the slots 12 are facing away from the dispensing opening 6. This can easily be done by initially once orientating the feed removing device 10 appropriately. In this way, the feed removal is optimized.

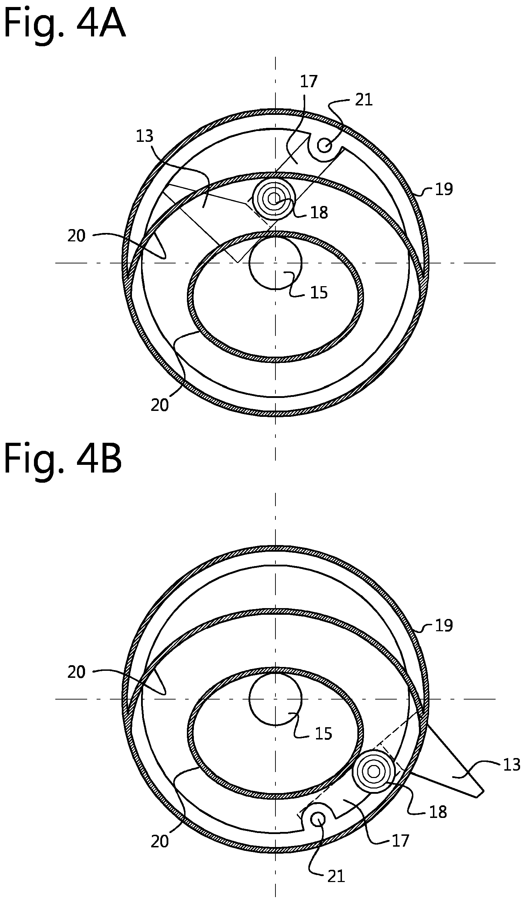

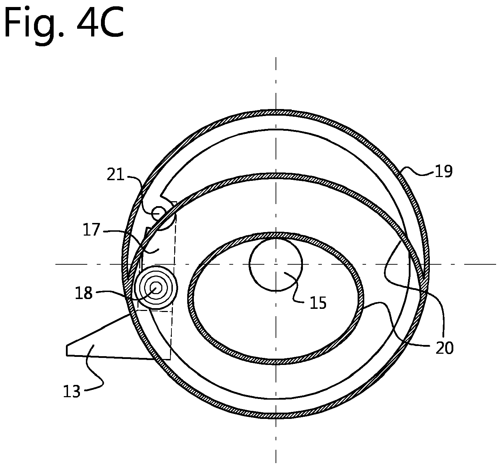

Figures 4A, 4B and 4C illustrate three positions of the teeth frame 17 (relative to the roller 11) during its movement defined by the curved track. Top views are shown from the roller 11 with shaft 15 and end cover 19. On the bottom side of the fixedly mounted end cover 19 there are provided guiding portions 20 for the curved track. As the roller 11 with the hingedly connected teeth frame 17 (via hinge 21) rotates in clockwise direction, guide wheel 18 connected to teeth frame 17 follows the curved track 20 and thus positions the row of teeth 13 with respect to the body of the roller 11.

In Figure 4A the teeth 13 are positioned completely inside the circumference of the roller 11. This is the position in which the feed removal device 10 is arranged to drop the feed outside the feed container 1. In Figure 4B the teeth 13 have started to protrude through the slots 12 in order to be able to catch feed in the feed container 1. In Figure 4C the teeth 13 are still protruding through the slots 12 and catching feed. Soon the teeth 13 will retract to a position within the circumference of the body 11.

Thus, the curved track 20 is formed such that during each rotation of the body 11 the teeth 13 perform a protruding movement through the slots 12 in the body 11 followed by a retracting movement through the slots 12. Excellent feed removing results are obtained in this way. The rotating body 11 and the hingeable teeth frame 17 following the curved track 20 perform a synchronized movement. In this way, it is possible to provide relatively small slots 12 for the teeth 13. Larger slots would have the important disadvantage of allowing feed to be pulled in by the retracting movement of the teeth 13.

The curved track 20 is likewise formed such that during each rotation of the body 11 the teeth 13 are positioned substantially completely within the circumference of the body 11 during substantially half of the rotation. This guarantees an excellent feed drop.

The synchronous rotating movement of the roller 11 and the teeth frame 17 provides a great advantage: the slots 12 need only be just large enough to enable the teeth 13 to pass through them. The teeth can still protrude through these small slots 12 over almost half the rotation of the roller 11, because of the simultaneous rotation with the relatively simple cam track construction. Moreover, the rotating roller/body 11 also contributes to the feed removing action, as the feed is pulled along with the rotating body 11.

## Claims

1. A feeding device for feeding animals, said device comprising a feed container (1) for accommodating feed, the feed container (1) being provided with a side wall (2) having a closable dispensing opening (6), and a feed removing device (10) for removing feed from the feed container (1), the feed removing device (10) being provided outside of the side wall (2) near the dispensing opening (6) and having a rotatable, substantially cylindrical body (11) with feed catching teeth (13) and a drive unit (14) for the body (11), wherein the teeth (13) are provided in a movable way relative to the body (11) during its rotation in such a way that, during a first part of each rotation of the body (11), the teeth are protruding from the body (11) through slots (12) to catch feed and that, during a second part of each rotation of the body (11), the teeth (13) are positioned substantially completely within the circumference of the body (11).

2. Feeding device according to claim 1, wherein the teeth (13) and the body (11) are arranged to perform a synchronized movement in each rotation, the teeth (13) protruding through the slots (12) in the body (11) in order to catch feed in the container (1) when these slots (12) are facing the dispensing opening (6) and the teeth (13) being retracted inside the body (11) to drop the feed outside the container (1) when the slots (12) are facing away from the dispensing opening (6).

3. Feeding device according to claim 1 or 2, wherein an orientating device for the feed removing device (10) is provided, which orientating device is suitable for orientating the cylindrical body (11) in a rest position such that the teeth (13) do not hinder the closing of the dispensing opening (6).

4. Feeding device according to claim 3, wherein the orientating device is suitable for orientating the cylindrical body (11) in a rest position such that the teeth (13) are positioned substantially completely within the circumference of the body (11).

5. Feeding device according to any one of claims 1 - 4, wherein the teeth (13) are provided in at least one, preferably one single row.

6. Feeding device according to any one of claims 1 - 5, wherein each row extends substantially in parallel to the axis of rotation of the body (11).

7. Feeding device according to any one of claims 1 - 5, wherein each row extends substantially helically around the axis of rotation of the body (11).

8. Feeding device according to any one of claims 1 - 7, wherein the rotation axis of the body (11) extends substantially vertically.

9. Feeding device according to any one of claims 1 - 8, wherein the feed removing device (10) comprises a curved track construction (18, 19, 20) for moving the teeth (13) with respect to the body (11) during its rotation.

10. Feeding device according to any one of claims 1 - 9, wherein the teeth (13) are mounted on a frame (17) which is attached hingeably to the inside of the body (11).

11. Feeding device according to claim 10, wherein the frame (17) is provided with a following means, like a wheel (18), suitable for following a defined curved track (20) provided on the inside of a fixed, non-rotatable end cover (19) of the body (11) during each rotation of the body (11).

12. Feeding device according to claim 11, wherein the rotating body (11) and the hingeable teeth frame (17) following the curved track (20) perform a synchronized movement in each rotation.

13. Feeding device according to any one of claims 9 - 12, wherein the curved track (20) is formed such that during each rotation of the body (11) the teeth (13) perform a protruding movement through the slots (12) in the body (11) followed by a retracting movement through the slots (12).

14. Feeding device according to any one of claims 9 - 13, wherein the curved track (20) is formed such that during each rotation of the body (11) the teeth (13) are positioned substantially completely within the circumference of the body (11) during substantially half of the rotation.

15. Feeding device according to any one of claims 1 - 14, wherein the feed container (1) comprises a mixing device (4), preferably with an auger (5), and an undercarriage (8).

## Patentansprüche

1. Fütterungsvorrichtung zum Füttern von Tieren, wobei die Vorrichtung einen Futterbehälter (1) zum Fassen von Futter umfasst, wobei der Futterbehälter (1) mit einer Seitenwand (2), die eine verschließbare Ausgabeöffnung (6) aufweist, und einer Futterentnahmevorrichtung (10) zum Entnehmen von Futter aus dem Futterbehälter (1) versehen ist, wobei die Futterentnahmevorrichtung (10) außerhalb der Seitenwand (2) in der Nähe der Ausgabeöffnung (6) vorgesehen ist und einen drehbaren im Wesentlichen zylindrischen Körper (11) mit Futter erfassenden Zähnen (13) und eine Antriebseinheit (14) für den Körper (11) aufweist, wobei die Zähne (13) beweglich bezüglich des Körpers (11) während seiner Drehung vorgesehen sind, so dass die Zähne während eines ersten Teils jeder Drehung des Körpers (11) zum Erfassen von Futter durch Schlitze (12) von dem Körper (11) vorragen und dass die Zähne (13) während eines zweiten Teils jeder Drehung des Körpers (11) im Wesentlichen vollständig innerhalb des Umfangs des Körpers (11) positioniert sind.

2. Fütterungsvorrichtung nach Anspruch 1, wobei die Zähne (13) und der Körper (11) dahingehend angeordnet sind, bei jeder Drehung eine synchronisierte Bewegung durchzuführen, wobei die Zähne (13) dahingehend durch die Schlitze (12) in dem Körper (11) hindurch vorragen, Futter in dem Behälter (1) zu erfassen, wenn die Schlitze (12) zur Ausgabeöffnung (6) weisen, und die Zähne (13) in den Körper (11) eingezogen werden, um das Futter außerhalb des Behälters (1) abzuwerfen, wenn die Schlitze (12) von der Ausgabeöffnung (6) weg weisen.

3. Fütterungsvorrichtung nach Anspruch 1 oder 2, wobei eine Ausrichtungsvorrichtung für die Futterentnahmevorrichtung (10) vorgesehen ist, wobei die Ausrichtungsvorrichtung für das Ausrichten des zylindrischen Körpers (11) in einer Ruhestellung, so dass die Zähne (13) das Schließen der Ausgabeöffnung (6) nicht behindern, geeignet ist.

4. Fütterungsvorrichtung nach Anspruch 3, wobei die Ausrichtungsvorrichtung für das Ausrichten des zylindrischen Körpers (11) in einer Ruhestellung, so dass die Zähne (13) im Wesentlichen vollständig innerhalb des Umfangs des Körpers (11) positioniert sind, geeignet ist.

5. Fütterungsvorrichtung nach einem der Ansprüche 1-4, wobei die Zähne (13) in mindestens einer, vorzugsweise mindestens einer einzigen, Reihe vorgesehen sind.

6. Fütterungsvorrichtung nach einem der Ansprüche 1-5, wobei sich jede Reihe im Wesentlichen parallel zur Drehachse des Körpers (11) erstreckt.

7. Fütterungsvorrichtung nach einem der Ansprüche 1-5, wobei sich jede Reihe im Wesentlichen spiralförmig um die Drehachse des Körpers (11) herum erstreckt.

8. Fütterungsvorrichtung nach einem der Ansprüche 1-7, wobei sich die Drehachse des Körpers (11) im Wesentlichen vertikal erstreckt.

9. Fütterungsvorrichtung nach einem der Ansprüche 1-8, wobei die Futterentnahmevorrichtung (10) eine Kurvenbahnkonstruktion (18, 19, 20) zum Bewegen der Zähne (13) bezüglich des Körpers (11) während seiner Drehung umfasst.

10. Fütterungsvorrichtung nach einem der Ansprüche 1-9, wobei die Zähne (13) an einem Rahmen (17) befestigt sind, der gelenkig an dem Inneren des Körpers (11) angebracht ist.

11. Fütterungsvorrichtung nach Anspruch 10, wobei der Rahmen (17) mit einem Folgemittel, wie z. B. einem Rad (18), das sich dazu eignet, einer definierten Kurvenbahn (20) zu folgen, versehen ist, das auf der Innenseite einer festen nicht drehbaren Endabdeckung (19) des Körpers (11) während jeder Drehung des Körpers (11) vorgesehen ist.

12. Fütterungsvorrichtung nach Anspruch 11, wobei der Drehkörper (11) und der gelenkige Zahnrahmen (17) beim Folgen der Kurvenbahn (20) bei jeder Drehung eine synchronisierte Bewegung durchführen.

13. Fütterungsvorrichtung nach einem der Ansprüche 9-12, wobei die Kurvenbahn (20) derart ausgebildet ist, dass die Zähne (13) während jeder Drehung des Körpers (11) eine durch die Schlitze (12) in dem Körper (11) vorragende Bewegung, gefolgt von einer Einzugsbewegung durch die Schlitze (12) durchführen.

14. Fütterungsvorrichtung nach einem der Ansprüche 9-13, wobei die Kurvenbahn (20) derart ausgebildet ist, dass die Zähne (13) während jeder Drehung des Körpers (11) während im Wesentlichen der Hälfte der Drehung im Wesentlichen vollständig innerhalb des Umfangs des Körpers (11) positioniert sind.

15. Fütterungsvorrichtung nach einem der Ansprüche 1-14, wobei der Futterbehälter (1) eine Mischvorrichtung (4), vorzugsweise mit einer Schnecke (5), und ein Fahrwerk (8) umfasst.

## Revendications

1. Dispositif d'alimentation pour l'alimentation d'animaux, ledit dispositif comprenant un récipient à aliments (1) pour recevoir des aliments, le récipient à aliments (1) étant pourvu d'une paroi latérale (2) ayant une ouverture de distribution pouvant être fermée (6), et un dispositif d'enlèvement d'aliments (10) pour enlever les aliments du récipient à aliments (1), le dispositif d'enlèvement d'aliments (10) étant disposé à l'extérieur de la paroi latérale (2) près de l'ouverture de distribution (6) et ayant un corps (11) rotatif sensiblement cylindrique avec des dents (13) attrapant les aliments et une unité d'entraînement (14) pour le corps (11), les dents (13) étant disposées de manière mobile par rapport au corps (11) pendant sa rotation de sorte que, pendant une première partie de chaque rotation du corps (11), les dents fassent saillie du corps (11) à travers des fentes (12) pour attraper les aliments et que, pendant une seconde partie de chaque rotation du corps (11), les dents (13) soient positionnées sensiblement complètement à l'intérieur de la circonférence du corps (11).

2. Dispositif d'alimentation selon la revendication 1, les dents (13) et le corps (11) étant conçus pour effectuer un mouvement synchronisé à chaque rotation, les dents (13) faisant saillie à travers les fentes (12) dans le corps (11) afin d'attraper les aliments dans le récipient (1) lorsque ces fentes (12) sont orientées face à l'ouverture de distribution (6) et les dents (13) étant rétractées à l'intérieur du corps (11) pour laisser tomber les aliments à l'extérieur du récipient (1) lorsque les fentes (12) sont orientées à l'opposé de l'ouverture de distribution (6).

3. Dispositif d'alimentation selon la revendication 1 ou 2, un dispositif d'orientation pour le dispositif d'enlèvement d'aliments (10) étant fourni, lequel dispositif d'orientation étant adapté pour orienter le corps (11) cylindrique dans une position de repos telle que les dents (13) ne gênent pas la fermeture de l'ouverture de distribution (6).

4. Dispositif d'alimentation selon la revendication 3, le dispositif d'orientation étant adapté pour orienter le corps cylindrique (11) dans une position de repos telle que les dents (13) soient positionnées sensiblement complètement à l'intérieur de la circonférence du corps (11).

5. Dispositif d'alimentation selon l'une quelconque des revendications 1 à 4, les dents (13) étant disposées sur au moins une, de préférence sur une seule rangée.

6. Dispositif d'alimentation selon l'une quelconque des revendications 1 à 5, chaque rangée s'étendant sensiblement parallèlement à l'axe de rotation du corps (11).

7. Dispositif d'alimentation selon l'une quelconque des revendications 1 à 5, chaque rangée s'étendant de manière sensiblement hélicoïdale autour de l'axe de rotation du corps (11).

8. Dispositif d'alimentation selon l'une quelconque des revendications 1 à 7, l'axe de rotation du corps (11) s'étendant sensiblement verticalement.

9. Dispositif d'alimentation selon l'une quelconque des revendications 1 à 8, le dispositif d'enlèvement d'aliments (10) comprenant une construction de piste incurvée (18, 19, 20) pour déplacer les dents (13) par rapport au corps (11) pendant sa rotation.

10. Dispositif d'alimentation selon l'une quelconque des revendications 1 à 9, les dents (13) étant montées sur un cadre (17) qui est fixé de manière articulée à l'intérieur du corps (11).

11. Dispositif d'alimentation selon la revendication 10, le cadre (17) étant pourvu d'un moyen suiveur, tel qu'une roue (18), adapté pour suivre une piste incurvée définie (20) disposée à l'intérieur d'un couvercle d'extrémité fixe, non rotatif (19) du corps (11) pendant chaque rotation du corps (11).

12. Dispositif d'alimentation selon la revendication 11, le corps rotatif (11) et le cadre de dents articulé (17) suivant la piste incurvée (20) effectuant un mouvement synchronisé à chaque rotation.

13. Dispositif d'alimentation selon l'une quelconque des revendications 9 à 12, la piste incurvée (20) étant formée de sorte que, lors de chaque rotation du corps (11), les dents (13) effectuent un mouvement de saillie à travers les fentes (12) dans le corps (11) suivi d'un mouvement de retrait à travers les fentes (12).

14. Dispositif d'alimentation selon l'une quelconque des revendications 9 à 13, la piste incurvée (20) étant formée de sorte que, pendant chaque rotation du corps (11), les dents (13) soient positionnées sensiblement complètement à l'intérieur de la circonférence du corps (11) pendant sensiblement la moitié de la rotation.

15. Dispositif d'alimentation selon l'une quelconque des revendications 1 à 14, le récipient à aliments (1) comprenant un dispositif de mélange (4), de préférence avec une vis sans fin (5), et un châssis de roulement (8).
